# EUROPÄISCHE PATENTSCHRIFT

(11) **EP 1 831 286 B1**
(45) Veröffentlichungstag und Bekanntmachung des Hinweises auf die Patenterteilung: **15.07.2009**
(21) Anmeldenummer: 05810938.0
(22) Anmeldetag: 09.11.2005
(51) Int. Cl.: C08G 69/26, A61C 5/00

(54) **TRANSPARENTE FORMMASSE**
TRANSPARENT MOULDING COMPOUND
MATIERE MOULABLE TRANSPARENTE

(30) Priorität: 29.12.2004 DE 102004063220
(43) Veröffentlichungstag der Anmeldung: 12.09.2007
(73) Patentinhaber: Evonik Degussa GmbH, 45128 Essen (DE)
(72) Erfinder: BAUMANN, Franz-Erich, 48249 Dülmen (DE); WURSCHE, Roland, 48249 Dülmen (DE); HÄGER, Harald, 59348 Lüdinghausen (DE); BOLLMANN, Sonja, 45721 Haltern am See (DE); ALTING, Kirsten, 48153 Münster (DE)
(86) Internationale Anmeldenummer: PCT/EP2005/055854
(87) Internationale Veröffentlichungsnummer: WO 2006/072496

(56) Entgegenhaltungen:
- GB-A- 1 326 023
- US-A1- 2002 179 888
- US-A1- 2003 173 707

## Beschreibung

Gegenstand der Erfindung ist eine transparente Formmasse aus einem Copolyamid, die sich zur Herstellung transparenter, bedruckbarer Artikel eignet. Die Artikel sind beispielsweise Folien und insbesondere Ski- oder Snowboard-Oberbeläge.

Das Gebrauchsmuster DE 295 19 867 U1 beschreibt eine dekorierbare Folie aus einem Copolyamid, das aus den Monomereinheiten Laurinlactam sowie Caprolactam und/oder Hexamethylendiamin/Dicarbonsäure aufgebaut ist. Derartige Copolyamide sind zwar im allgemeinen transparent und sie sind auch gut dekorierbar, allerdings treten bei der Herstellung von Formteilen oder Folien aus solchen Copolyamiden durch Extrusion immer wieder Probleme auf. Insbesondere bilden sich Beläge am Spritzguss- oder Extrusionswerkzeug oder an den Abzugswalzen, die eine häufige Unterbrechung der Produktion wegen der nötigen Reinigungsarbeiten verursachen. Darüber hinaus ist die Wärmeformbeständigkeit derartiger Folien unzureichend, weshalb beim Dekorieren mittels Sublimations- oder Thermodiffusionsdruck die Gefahr der Verformung besteht. Man muss daher bei niedrigerer Temperatur dekorieren, als bei diesen Verfahren eigentlich wünschenswert wäre.

Im Artikel von M. Beyer und J. Lohmar, Kunststoffe 90 (2000) 1, S. 98 - 101 werden Beispiele für bedruckbare Folien aus PA12-Formmassen angegeben. Derartige Folien weisen jedoch die gleichen Nachteile im Hinblick auf Belagsbildung und zu geringe Wärmeformbeständigkeit auf.

In der US 2002/0179888 A1 werden transparente Zusammensetzungen beschrieben, die, neben weiteren Komponenten, ein amorphes Polyamid aus einem gegebenenfalls cycloaliphatischen Diamin, einer aromatischen Dicarbonsäure sowie gegebenenfalls weiteren polyamidbildenden Monomeren enthalten. Die US 2003/0173707 A1 beschreibt Polyamid-Schmelzkleber, die unter Verwendung eines cycloaliphatischen Diamins hergestellt wurden.

Die Aufgabe der vorliegenden Erfindung bestand insbesondere darin, eine Formmasse zur Verfügung zu stellen, die einerseits eine ausreichende Kristallinität besitzt, um eine ausreichende Spannungsrissbeständigkeit zu erzielen, die andererseits aber trotzdem ausreichend transparent ist. Eine ausreichende Spannungsrissbeständigkeit ist nicht nur von Bedeutung, wenn die daraus gefertigten Folien oder Formteile zusätzlich bzw. alternativ auch im Siebdruck oder Offsetdruck dekoriert werden sollen, sondern auch im späteren Gebrauch, wenn die Fertigteile mit alkoholbasierten Reinigungsmitteln bearbeitet werden. Die Transparenz muss soweit gegeben sein, dass bei einer Folie ein ausreichend konturscharfes Hinterdrucken möglich ist. Darüber hinaus sollte die Formmasse bei der Verarbeitung zumindest zu einer deutlich verringerten Belagsbildung Anlass geben. Eine wesentlicher Aspekt der zugrundeliegenden Aufgabe bestand auch darin, dass eine Polyamidformmasse zur Verfügung gestellt werden sollte, die zu Artikeln wie Formteilen oder Folien verarbeitet werden kann, welche auch mittels Thermodiffusions- oder Sublimationsdruck gut bedruckbar sind. Diese thermischen Druckverfahren bedingen häufig eine erhöhte Wärmeformbeständigkeit der Folien oder Formteile. Bei den hier in Betracht kommenden Formmassen korreliert die Wärmeformbeständigkeit mit dem Kristallitschmelzpunkt Tₘ; für diese thermischen Druckverfahren ist ein Tₘ von mindestens 180 °C wünschenswert. Zu niedrige Wärmeformbeständigkeiten äußern sich in Verzug oder Deformation der zu bedruckenden Folien oder Formteile. Absenkung der Sublimationstemperatur beeinträchtigt hingegen Kontrast und Konturenschärfe des Druckbildes, da die Farbe nicht mehr tief genug in die Folie eindringt. Es versteht sich für den Fachmann von selbst, dass die sonstigen Verarbeitungseigenschaften, wie die fest anhaftende Verklebung zum Untergrund, z. B. dem Skikörper, oder die Hinterspritzbarkeit, nicht durch oberflächliche, nicht eindiffundierte Farbreste beeinträchtigt werden dürfen.

Überraschenderweise konnte diese Aufgabe gelöst werden durch die Verwendung einer Formmasse, die zu mindestens 50 Gew.-%, bevorzugt zu mindestens 60 Gew.-%, besonders bevorzugt zu mindestens 70 Gew.-%, 80 Gew.-% oder 90 Gew.-% und insbesondere bevorzugt zu mindestens 95 Gew.-% ein nachfolgend beschriebenes Copolyamid enthält, zur Herstellung eines bedruckbaren oder bedruckten Artikels.

Gegenstand der Erfindung sind auch die aus dieser Formmasse hergestellten Artikel.

Das erfindungsgemäß verwendbare Copolyamid ist aus folgender Monomerkombination aufgebaut:
a) 65 bis 99 Mol-%, bevorzugt 75 bis 98 Mol-%, besonders bevorzugt 80 bis 97 Mol-% und insbesondere bevorzugt 85 bis 96 Mol-% eines im wesentlichen äquimolaren Gemisches aus einem aliphatischen unverzweigten Diamin und einer aliphatischen unverzweigten Dicarbonsäure, wobei das Gemisch gegebenenfalls als Salz vorliegt und darüber hinaus Diamin und Dicarbonsäure bei der Berechnung der Zusammensetzung jeweils einzeln gezählt werden,
   mit der Einschränkung, dass das Gemisch aus Diamin und Dicarbonsäure im Mittel 8 bis 12 C-Atome und bevorzugt 9 bis 11 C-Atome pro Monomer enthält;
b) 1 bis 35 Mol-%, bevorzugt 2 bis 25 Mol-%, besonders bevorzugt 3 bis 20 Mol-% und insbesondere bevorzugt 4 bis 15 Mol-% eines im wesentlichen äquimolaren Gemisches aus einem cycloaliphatischen Diamin und einer Dicarbonsäure.

Das lineare unverzweigte Diamin, das unter a) eingesetzt wird, besitzt in der Regel 6 bis 18 C-Atome; beispielsweise sind hier 1.6-Hexamethylendiamin, 1.8-Octamethylendiamin, 1.9-Nonamethylendimain, 1.10-Decamethylendiamin und 1.12-Dodecamethylendiamin geeignet.

Die lineare unverzweigte Dicarbonsäure, die unter a) eingesetzt wird, besitzt ebenfalls in der Regel 6 bis 18 C-Atome; geeignet sind beispielsweise Adipinsäure, Korksäure, Azelainsäure, Sebacinsäure, 1.12-Dodecandisäure, Brassylsäure und 1.14-Tetradecandisäure.

Bevorzugt sind die Kombinationen Hexamethylendiamin/1.12-Dodecandisäure, 1.10-Decamethylendiamin/Sebacinsäure, Hexamethylendiamin/Sebacinsäure und 1.10-Decamethylendiamin/1.12-Dodecandisäure.

Das cycloaliphatische Diamin, das unter b) eingesetzt wird, besitzt in der Regel 8 bis 24 C-Atome. Geeignet sind beispielsweise 1.4- oder 1.3-Bis(aminomethyl)hexan, 4,4'-Diaminodicyclohexylmethan, 4,4'-Diamino-3.3'-dimethyldicyclohexylmethan, 4,4'-Diamino-3.3'-dimethyldicyclohexylpropan sowie Isophorondiamin.

Die Dicarbonsäure, die unter b) eingesetzt wird, kann aus der gleichen Gruppe ausgewählt werden wie diejenige, die unter a) eingesetzt wird. Beide Dicarbonsäuren können identisch oder verschieden sein. Es kann jedoch auch jede andere Dicarbonsäure mit vorzugsweise 6 bis 18 C-Atomen eingesetzt werden, beispielsweise 2-Methylpentandisäure, Isophthalsäure oder Cyclohexan-1.4-dicarbonsäure.

Zur Herstellung des Copolyamids können anstelle von Dicarbonsäuren und Diaminen selbstverständlich auch deren polyamidbildende Derivate eingesetzt werden.

In einer bevorzugten Ausführungsform besitzt das Copolyamid einen Kristallitschmelzpunkt Tₘ im Bereich von 180 - 220 °C, besonders bevorzugt im Bereich von 185 - 210 °C und insbesondere bevorzugt im Bereich von 190 - 200 °C. Weiterhin beträgt die Schmelzenthalpie des Copolyamids bevorzugt mindestens 30 J/g, besonders bevorzugt mindestens 45 J/g und insbesondere bevorzugt mindestens 55 J/g. Tₘ und Schmelzenthalpie werden durch DDK gemäß ISO 11357 in der 2. Aufheizkurve mit einer Heizrate von 20 K/mm bestimmt. Den zum Erreichen des Zielwerts erforderlichen Anteil des Monomerengemisches gemäß b) kann der Fachmann durch wenige Handversuche leicht ermitteln.

Im allgemeinen besitzt das Copolyamid eine relative Lösungsviskosität ηᵣₑₗ, gemessen an einer 0,5-gewichtsprozentigen Lösung in m-Kresol bei 23 °C gemäß ISO 307, von etwa 1,5 bis etwa 2,5, bevorzugt von etwa 1,7 bis etwa 2,2 und besonders bevorzugt von etwa 1,8 bis etwa 2,1. In einer bevorzugten Ausführungsform beträgt die Schmelzeviskosität, gemessen in einem mechanischen Spektrometer (Kegel-Platte) nach ASTM D4440 bei 240 °C und einer Scherrate von 100 s⁻¹, 250 bis 10 000 Pas, bevorzugt 350 bis 8 000 Pas und besonders bevorzugt 500 bis 5 000 Pas.

Die Formmasse kann optional folgende weitere Komponenten enthalten:
- andere Polymere wie z. B. ein Homopolyamid, das bevorzugt aus der gemäß a) verwendeten Monomerenkombination zusammengesetzt ist, oder ein Polyamid-Elastomer, dessen Polyamidanteil ebenfalls bevorzugt aus der gemäß a) verwendeten Monomerenkombination zusammengesetzt ist, sowie
- übliche Hilfs- und Zusatzstoffe in den für Polyamidformmassen üblichen Mengen, beispielsweise Stabilisatoren, Gleitmittel, Farbstoffe oder Nucleierungsmittel.

Diese Formmasse kann zur Herstellung von Artikeln wie Formteilen oder Folien verwendet werden, die ebenfalls Gegenstand der Erfindung sind. Die Folien haben in einer bevorzugten Ausführungsform eine Dicke von 0,02 bis 1 mm, besonders bevorzugt von 0,05 bis 0,8 mm, ganz besonders bevorzugt von 0,1 bis 0,6 mm und insbesondere bevorzugt von 0,2 bis 0,5 mm. Die Folie kann auch mehrschichtig ausgeführt sein, wobei folgende Ausführungsformen bevorzugt sind:
1. Die mehrschichtige Folie enthält eine weitere Schicht aus einer Polyamidelastomer-Formmasse, insbesondere eines Polyetheramids oder eines Polyetheresteramids, und vorzugsweise eines Polyetheramids oder Polyetheresteramids auf Basis eines linearen aliphatischen Diamins mit 6 bis 18 und bevorzugt 6 bis 12 C-Atomen, einer linearen aliphatischen oder einer aromatischen Dicarbonsäure mit 6 bis 18 und bevorzugt 6 bis 12 C-Atomen und eines Polyethers mit mehr als durchschnittlich 2,3 C-Atomen pro Sauerstoffatom und einer zahlenmittleren Molmasse von 200 bis 2 000. Die Formmasse dieser Schicht kann weitere Blendkomponenten enthalten wie z. B. Polyacrylate oder Polyglutarimide mit Carboxyl- bzw. Carbonsäureanhydridgruppen oder Epoxidgruppen, einen funktionelle Gruppen enthaltenden Kautschuk und/oder ein Polyamid. Derartige Formmassen sind Stand der Technik; sie sind beispielsweise in der EP 1 329 481 A2 und der DE-OS 103 33 005 beschrieben, auf die hier ausdrücklich Bezug genommen wird. Um eine gute Schichtenhaftung zu gewährleisten, ist es vorteilhaft, wenn hier der Polyamidanteil des Polyamidelastomeren aus den gleichen Monomeren aufgebaut ist, wie sie im Copolyamid der anderen Schicht als Monomerkombination a) verwendet werden.
2. Die mehrschichtige Folie enthält eine weitere Schicht aus einer Formmasse auf Basis des gleichen oder eines ähnlichen Copolyamids und/oder eines Polyamids, das bevorzugt aus den gleichen Monomeren aufgebaut ist, wie sie im Copolyamid der anderen Schicht als Monomerkombination a) verwendet werden.
3. Die mehrschichtige Folie enthält eine Haftvermittlerschicht zur Anbindung an das Substrat oder zur Verbindung innerhalb des mehrschichtigen Folienaufbaus, beispielsweise ein mit Carboxyl- bzw. Säureanhydridgruppen oder mit Epoxidgruppen funktionalisiertes Polyolefin, ein Blend aus dem Material der untersten Schicht und dem Substratmaterial oder ein thermoplastisches Polyurethan.

Diese Ausführungsformen können auch miteinander kombiniert werden. In jedem Fall ist bevorzugt, dass die Schicht aus dem erfindungsgemäß verwendeten Copolyamid die Deckschicht bildet. Bei Bedarf, etwa bei erhöhten Anforderungen an die Kratzfestigkeit, kann diese Deckschicht gegebenenfalls noch mit einer Schutzschicht versehen sein, beispielsweise mit einem Klarlack auf Polyurethanbasis. Sie kann auch gegebenenfalls mit einer Montagefolie abgedeckt sein, die nach der Herstellung des Ferdgteils abgezogen wird.

Die zweite, untenliegende Schicht oder, bei mehr als 2 Schichten, eine der untenliegenden Schichten kann farblos transparent, transparent eingefärbt oder auch deckend eingefärbt sein, um spezielle Designvarianten in Kombination mit der transparenten Deckschicht darstellen zu können. In solchen Fällen kann die transparente Deckschicht zusätzlich von der Oberseite her bedruckt werden.

Die Folien können beispielsweise als Schutzfolie gegen Verschmutzung, UV-Strahlung, Witterungseinflüsse, Chemikalien oder Abrieb verwendet werden, als Sperrfolie an Fahrzeugen, im Haushalt, an Böden, Tunnels, Zelten und Gebäuden oder als Dekorträger etwa für Oberbeläge von Sportgeräten, Innen- oder Außendekorationen an Kraftfahrzeugen, Booten, im Haushalt oder an Gebäuden. Diese Verwendungsmöglichkeiten gelten auch für Fälle, in denen die Formmasse deckend eingefärbt ist. Die stoffschlüssige Verbindung der Folie zum Substrat kann beispielsweise durch Verkleben, Verpressen, Laminieren, Coextrusion oder Hinterspritzen hergestellt werden. Zum Erreichen einer verbesserten Haftung kann die Folie zuvor beispielsweise beflammt oder mit einem Plasma behandelt werden.

In einer bevorzugten Ausführungsform wird die erfindungsgemäße Folie als Oberbelag für Schneebretter aller Art, wie Skier oder Snowboards, verwendet.

Ein bekanntes Verfahren zur Ausführung von dekorierten Ski-Oberbelägen wird in der US 5 437 755 beschrieben. Gemäß diesem Verfahren wird der Ski nach dem sogenannten Monocoque-System hergestellt, wobei der Oberbelag zunächst aus zwei Kunststofffolien aufgebaut wird, von denen die äußere transparent und die innere opak (weiß) ist. Vor dem Zusammenkleben der beiden Folien und dem nachfolgenden Tiefziehen werden die Außenseite der transparenten Oberfolie und eine der späteren Kontaktflächen zwischen der transparenten Oberfolie und der opaken Unterfolie mit unterschiedlichen Dekorationen bedruckt. Als geeignete Kunststoffe für die Oberfolie werden Acrylnitril-Butadien-Styrol-Copolymer (ABS), Acrylnitril-Styrol-Copolymer (AS), thermoplastisches Polyurethan (TPU) und aliphatische Polyamide, besonders PA11 und PA12, angegeben. Nur für die vor äußeren Einflüssen geschützte und nicht in jedem Fall bedruckte Unterfolie werden neben Polyesteramiden, Polyetheramiden, modifizierten Polyolefinen und Styrol-Carbonsäureanhydrid-Copolymeren auch Copolyamide beschrieben. Die Verbindung des Oberbelags mit dem Ski oder Snowboard kann aber auch nach allen anderen bekannten Formgebungs- und Verklebungsverfahren erfolgen.

Wird erfindungsgemäß eine Monofolie verwendet, so ist diese transparent und wird vorzugsweise unterseitig bedruckt, wobei in diesem Fall ein weißer oder gegebenenfalls anders eingefärbter Kleber als optischer Hintergrund zum Verbinden der Folie mit dem Ski verwendet wird.

Wird eine coextrudierte Zweischichtfolie verwendet, so besteht diese vorzugsweise aus einer transparenten Oberschicht und einer weiß oder farbig pigmentierten Unterschicht als Hintergrund, wobei die Folie an der Oberseite bedruckt ist.

Die Erfindung wird nachfolgend beispielhaft illustriert.

### Vergleichsbeispiel 1:

Es wurde ein Copolyamid aus 80 Mol-% Laurinlactam und 20 Mol-% Caprolactam eingesetzt. Die relative Lösungsviskosität ηᵣₑₗ betrug 1,9.

### Vergleichsbeispiel 2:

Es wurde ein Copolyamid aus 80 Mol-% Laurinlactam und 20 Mol-% eines äquimolaren Gemisches aus Hexamethylendiamin und 1.12-Dodecandisäure mit einem ηᵣₑₗ von 1,89 eingesetzt.

### Vergleichsbeispiel 3:

Es wurde ein Copolyamid aus 85 Mol-% Laurinlactam, 7,5 Mol-% Isophorondiamin und 7,5 Mol-% 1.12-Dodecandisäure mit einem ηᵣₑₗ von 1,85 eingesetzt.

### Beispiel 1:

Zur Herstellung eines CoPA612/IPD12 (90 : 10) wurde ein 200 1-Rührautoklav mit folgenden Einsatzstoffen beschickt:

| | |
|---|---|
| 41,03 kg | Hexamethylendiamin (als 68,5%ige wässrige Lösung), |
| 4,625 kg | Isophorondiamin, |
| 62,80 kg | 1.12-Dodecandisäure sowie |
| 19,2 g | einer 50 %igen wässrigen Lösung von Hypophosphoriger Säure (entspricht 0,006 Gew.-%). |

Die Einsatzstoffe wurden in einer Stickstoffatmosphäre aufgeschmolzen und unter Rühren im geschlossenen Autoklaven auf ca. 220 °C erhitzt, wobei sich ein Innendruck von ca. 20 bar einstellte. Dieser Innendruck wurde 2 Stunden beibehalten; danach wurde die Schmelze unter kontinuierlichem Entspannen auf Normaldruck weiter auf 280 °C aufgeheizt und danach 1,5 Stunden im Stickstoffstrom bei dieser Temperatur gehalten. Anschließend wurde weitere 3 Stunden Stickstoff über die Schmelze geleitet, bis anhand des Drehmoments kein weiterer Anstieg der Schmelzeviskosität mehr angezeigt wurde. Danach wurde die Schmelze mittels Zahnradpumpe ausgetragen und als Strang granuliert. Das Granulat wurde 24 Stunden unter Stickstoff bei 80 °C getrocknet.
Austrag: 85 kg

Das Produkt wies folgende Kennwerte auf:

| | |
|---|---|
| Kristallitschmelzpunkt Tₘ: | 195 °C |
| Relative Lösungsviskosität ηᵣₑₗ: | 1,95 |

### Beispiel 2:

Zur Herstellung eines CoPA612/IPD12 (80 : 20) wurde das Beispiel 1 mit folgenden Einwaagen wiederholt:

| | |
|---|---|
| 35,93 kg | Hexamethylendiamin (68,5%ige wässrige Lösung), |
| 9,111 kg | Isophorondiamin, |
| 61,85kg | 1.12-Dodecandisäure sowie |
| 19,3 g | einer 50%igen wässrigen Lösung von hypophosphoriger Säure (entspr. 0,006 Gew.-%). |

Austrag: 84,1 kg

Das Produkt zeigte folgende Kennwerte:

| | |
|---|---|
| Kristallitschmelzpunkt Tₘ: | 185 °C |
| Relative Lösungsviskosität ηᵣₑₗ: | 1,93 |

Aus den Produkten der Beispiele 1 und 2 sowie der Vergleichsbeispiele 1 bis 3 wurden Folien der Dicke 0,4 mm extrudiert und beurteilt. Die Ergebnisse sind in der nachfolgenden Tabelle dargestellt.

Bei den Formmassen mit schlechter Verarbeitbarkeit war durch die langsame Nachkristallisation ein starker Verzug bemerkbar. Die Bildung von Belägen an den Abzugswalzen wurde visuell verfolgt.

**Tabelle: Beurteilung der Formmassen**

| Formmasse aus | Transparenz | Verarbeitbarkeit/Belagsbildung | Kristallitschmelzpunkt Tₘ [°C] | Kristallisationstemperatur (DDK) [°C] | Schmelzenthalpie [J/g] |
|---|---|---|---|---|---|
| Vergleichsbeispiel 1 | gut | schlecht, starke Beläge | 150 | 85 | 40 |
| Vergleichsbeispiel 2 | gut | schlecht/ Beläge | 159 | 89 | 39 |
| Vergleichsbeispiel 3 | gut | schlecht/ Beläge | 158 | 90 | 41 |
| Beispiel 1 | gut | gut | 195 | 130 | 60 |
| Beispiel 2 | gut | gut | 185 | 116 | 43 |

Alle Folien aus Beispiel 1 und 2 ließen sich mittels Thermodiffusionsdruck gut dekorieren, die Folien der Vergleichsbeispiele 1 - 3 wurden dabei deformiert. Störende Beläge auf den Abzugswalzen wurden bei den Vergleichsbeispielen - vor allem dem Vergleichsbeispiel 1 - wiederholt bei längerem Extrudieren beobachtet, nicht dagegen bei den erfindungsgemäßen Beispielen.

## Patentansprüche

1. Verwendung einer Formmasse, die zu mindestens 50 Gew.-% ein Copolyamid enthält, das aus folgender Monomerkombination aufgebaut ist:
a) 65 bis 99 Mol-% eines im wesentlichen äquimolaren Gemisches aus einem aliphatischen unverzweigten Diamin mit 6 bis 18 C-Atomen und einer aliphatischen unverzweigten Dicarbonsäure mit 6 bis 18 C-Atomen,
wobei das Gemisch aus Diamin und Dicarbonsäure im Mittel 8 bis 12 C-Atome enthält, sowie
b) 1 bis 35 Mol-% eines im wesentlichen äquimolaren Gemisches aus einem cycloaliphatischen Diamin mit 8 bis 20 C-Atomen und einer Dicarbonsäure mit 6 bis 18 C-Atomen,
zur Herstellung eines bedruckbaren oder bedruckten Artikels.

2. Verwendung gemäß Anspruch 1,
**dadurch gekennzeichnet,**
**dass** das Copolyamid einen Kristallitschmelzpunkt Tₘ im Bereich von 180 bis 220 °C besitzt.

3. Verwendung gemäß einem der vorhergehenden Ansprüche,
**dadurch gekennzeichnet,**
**dass** die Schmelzenthalpie des Copolyamids mindestens 30 J/g beträgt.

4. Verwendung gemäß einem der vorhergehenden Ansprüche,
**dadurch gekennzeichnet,**
**dass** die Monomerkombination a) des Copolyamids ausgewählt ist aus der Gruppe Hexamethylendiamin/Sebacinsäure, Hexamethylendiamin/1.12-Dodecandisäure, 1.10-Decamethylendiamin/Sebacinsäure und 1.10-Decamethylendiamin/1.12-Dodecandisäure.

5. Bedruckbarer oder bedruckter Artikel, der die gemäß den Ansprüchen 1 bis 4 verwendete Formmasse enthält.

6. Artikel gemäß Anspruch 5,
**dadurch gekennzeichnet,**
**dass** er eine einschichtige oder mehrschichtige Folie ist.

7. Artikel gemäß Anspruch 6,
**dadurch gekennzeichnet,**
**dass** er eine Dicke von 0,02 bis 1 mm aufweist.

8. Artikel gemäß einem der Ansprüche 6 und 7,
**dadurch gekennzeichnet,**
**dass** er eine oder mehrere weitere untenliegende Schichten enthält, die ausgewählt sind aus der Gruppe Polyamid-Elastomer, Polyamid, Copolyamid und Haftvermittler.

9. Artikel gemäß einem der Ansprüche 6 bis 8,
**dadurch gekennzeichnet,**
**dass** eine der untenliegenden Schichten transparent oder deckend eingefärbt ist.

10. Artikel gemäß einem der Ansprüche 6 bis 9,
**dadurch gekennzeichnet,**
**dass** er ein Oberbelag für Skier oder Snowboards ist.

## Claims

1. Use of a molding composition which comprises at least 50% by weight of a copolyamide, which is composed of the following monomer combination:
a) from 65 to 99 mol% of a substantially equimolar mixture composed of an unbranched aliphatic diamine having from 6 to 18 carbon atoms and of an unbranched aliphatic dicarboxylic acid having from 6 to 18 carbon atoms, where the mixture composed of diamine and dicarboxylic acid comprises an average of from 8 to 12 carbon atoms, and
b) from 1 to 35 mol% of a substantially equimolar mixture composed of a cycloaliphatic diamine having from 8 to 20 carbon atoms and of a dicarboxylic acid having from 6 to 18 carbon atoms,
for production of a printable or printed item.

2. Use according to Claim 1,
**characterized in that**
the copolyamide has a crystallite melting point Tₘ in the range from 180 to 220°C.

3. Use according to either of the preceding claims,
**characterized in that** the enthalpy of fusion of the copolyamide is at least 30 J/g.

4. Use according to either of the preceding claims,
**characterized in that**
the monomer combination a) of the copolyamide has been selected from the group of hexamethylenediamine/sebacic acid, hexamethylenediamine/1,12-dodecanedioic acid, 1,10-decamethylenediamine/sebacic acid, and 1,10-decamethylenediamine/1,12-dodecanedioic acid.

5. Printable or printed item which comprises the molding composition used according to Claims 1 to 4.

6. Item according to Claim 5,
**characterized in that**
it is a single-layer or multilayer foil.

7. Item according to Claim 6,
**characterized in that**
its thickness is from 0.02 to 1 mm.

8. Item according to Claim 6 or 7,
**characterized in that** it comprises one or more further underlayers, selected from the group of polyamide elastomer, polyamide, copolyamide, and adhesion promoter.

9. Item according to any of Claims 6 to 8,
**characterized in that**
one of the underlayers has been transparently or opaquely colored.

10. Item according to any of Claims 6 to 9,
**characterized in that**
it is a topcoat for skis or snowboards.

## Revendications

1. Utilisation d'une masse de moulage qui contient, à raison d'au moins 50% en poids, un copolyamide qui est constitué par la combinaison de monomères suivante
a) 65 à 99% en mole d'un mélange essentiellement équimolaire d'une diamine aliphatiquement non ramifiée comprenant 6 à 18 atomes de carbone et d'un acide dicarboxylique aliphatique non ramifié comprenant 6 à 18 atomes de carbone, le mélange de diamine et d'acide dicarboxylique contenant en moyenne 8 à 12 atomes de carbone, ainsi que
b) 1 à 35% en mole d'un mélange essentiellement équimolaire d'une diamine cycloaliphatique comprenant 8 à 20 atomes de carbone et d'un acide dicarboxylique comprenant 6 à 18 atomes de carbone,
pour la préparation d'un objet imprimable ou imprimé.

2. Utilisation selon la revendication 1, **caractérisée en ce que** le copolyamide présente un point de fusion des cristaux Tₘ dans la plage de 180 à 220°C.

3. Utilisation selon l'une quelconque des revendications précédentes, **caractérisée en ce que** l'enthalpie de fusion du copolyamide est d'au moins 30 J/g.

4. Utilisation selon l'une quelconque des revendications précédentes, **caractérisée en ce que** la combinaison de monomères a) du copolyamide est choisie dans le groupe formé par les combinaisons hexaméthylènediamine/acide sébacique, hexaméthylènediamine/acide 1,12-dodécanedioïque, 1,10-décaméthylènediamine/acide sébacique et 1,10-décaméthylènediamine/acide 1,12-dodécanedioïque.

5. Objet imprimable ou imprimé qui contient la masse de moulage utilisée selon les revendications 1 à 4.

6. Objet selon la revendication 5, **caractérisé en ce qu'**il s'agit d'une feuille à une ou plusieurs couches.

7. Objet selon la revendication 6, **caractérisé en ce qu'**il présente une épaisseur de 0,02 à 1 mm.

8. Objet selon l'une quelconque des revendications 6 et 7, **caractérisé en ce qu'**il contient une ou plusieurs autres couches sous-jacentes, qui sont choisies dans le groupe formé par les élastomères de polyamide, les polyamides, les copolyamides et les promoteurs d'adhérence.

9. Objet selon l'une quelconque des revendications 6 à 8, **caractérisé en ce qu'**une des couches sous-jacentes est transparente ou présente une couleur couvrante.

10. Objet selon l'une quelconque des revendications 6 à 9, **caractérisé en ce qu'**il s'agit d'un recouvrement supérieur pour des skis ou des snowboards.
